# EUROPEAN PATENT APPLICATION

(11) **EP 2 624 172 A1**
(43) Date of publication of application: **07.08.2013**
(21) Application number: 12305132.8
(22) Date of filing: 06.02.2012
(51) Int. Cl.: G06K 9/20, G06F 3/01

(54) **Presence detection device**

(71) Applicant: STMicroelectronics (Rousset) SAS, 13790 Rousset (FR); STMicroelectronics, Inc., Coppell, TX 75019 (US)
(72) Inventor: Coulon, David, 13100 AIX EN PROVENCE (FR); Winterton, Darin, SAN JOSE, CA California 95124 (US)
(74) Representative: de Beaumont, Michel

(57) **Abstract**

The invention concerns a user presence detection device having: a camera module (102) with a silicon-based image sensor (108) adapted to capture an image; and a processing device (104) configured to process said image to detect the presence of a user, wherein the camera module further comprises a light filter (107) having a lower cut-off wavelength of between 550 nm and 700 nm.

## Description

### FIELD

The present disclosure relates to a device for detecting the presence of a user, and to a method of manufacturing a camera module of such a device.

### BACKGROUND

It has been proposed to use presence detection based on an image captured by an image sensor of a digital camera to automatically detect the presence of one or more users, and perform actions in response. For example, the camera can be adapted to automatically focus on the detected user, or to identify the user's face on a display. User presence detection generally involves detecting in an image certain features of a user, such as a face, using pattern recognition.

Generally, the image sensor used for presence detection is a color sensor that captures visible light, and often comprises an infrared light filter for removing non-visible light in the infrared and near infrared light spectrums.

A problem with the existing presence detection devices is that the ability to accurately detect the presence of a face or other human feature is greatly influenced by the lighting conditions. Under certain unfavourable lighting conditions, performance can be very low. In particular, the presence of an artificial light source and/or sunlight within the field of view of the camera can cause interfere to such an extent that a user presence is missed entirely.

There is thus a need for a user presence detection device that provides robust detection of a user in a range of challenging lighting conditions.

### SUMMARY

It is an aim of embodiments described herein to at least partially address one or more needs in the prior art.

According to one aspect, there is provided a user presence detection device comprising a camera module having a silicon-based image sensor adapted to capture an image; and a processing device configured to process said image to detect the presence of a user, wherein the camera module further comprises a light filter having a lower cut-off wavelength of between 550 nm and 700 nm.

According to one embodiment, said light filter has a lower cut-off wavelength of between 550 nm and 600 nm.

According to another embodiment, said light filter is formed of a layer of material coating a pixel matrix of said image sensor.

According to another embodiment, said light filter is formed of a layer of polymer material.

According to another embodiment, said light filter is a band pass filter having a higher cut-off wavelength of between 900 nm and 1100 nm.

According to another embodiment, said image sensor comprises a CMOS pixel matrix.

According to another embodiment, said processing device is configured to apply a pattern detection or feature vector technique in order to detect the presence of a user.

According to another embodiment, said pattern detection technique is based on the detection of Haar-like features in said image.

According to another embodiment, said processing device is configured to detect the presence of the face or a hand of the user in said image.

According to another embodiment, the user presence detection device further comprises a light emitting diode adapted to generate light having a wavelength of between 800 nm and 1000 nm.

According to another embodiment, said processing device is adapted to control a further hardware device in response to the detection of the presence of said user in said image.

According to another embodiment, said camera module is oriented in said device such that its field of view encompasses a zone in front of said display, and wherein said processing device is configured to deactivate said display if no user presence is detected in said zone.

According to another embodiment, the user presence detection device comprises a further camera module having a color image sensor.

According to a further aspect of the present invention, there is provided a semiconductor chip comprising the above user presence detection device.

According to a yet a further aspect of the present invention, there is provided a method of manufacturing a camera module comprising a silicon-based image sensor for use in detecting the presence of a user, the method comprising: coating an element of the camera module with a layer of material to form a light filter having a lower cut-off wavelength of between 550 nm and 700 nm.

According to one embodiment, said element is a pixel matrix of said image sensor, and wherein said material is a polymer photoresist.

### BRIEF DESCRIPTION OF THE DRAWINGS

The foregoing and other purposes, features, aspects and advantages of embodiments of the present disclosure will become apparent from the following detailed description of embodiments, given by way of illustration and not limitation with reference to the accompanying drawings, in which:
Figure 1 schematically illustrates a user presence detection device according to an embodiment of the present disclosure;
Figures 2A to 2E schematically illustrate a camera module of the user presence detection device of Figure 1 in more detail according to embodiments of the present disclosure;
Figure 3 is a graph illustrating an example of light transmission of a light filter of camera module of Figure 1 for a range of wave lengths;
Figure 4A illustrates an example of an electronic device comprising a user presence detection device according to an embodiment of the present disclosure;
Figure 4B schematically represents an example of an image captured by an image sensor of the user presence detection device of Figure 1 according to an embodiment of the present disclosure; and
Figure 5 schematically illustrates a user presence detection device according to a further embodiment of the present disclosure.

### DETAILED DESCRIPTION OF THE INVENTION

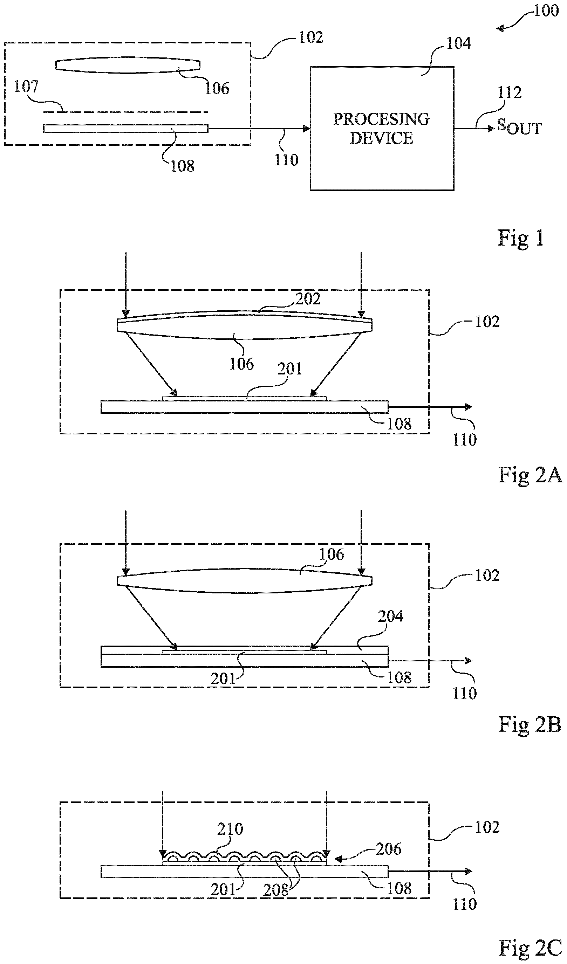

Figure 1 schematically illustrates a presence detection device 100 according to an example embodiment.

Device 100 comprises a camera module 102 and a processing device 104. The camera module 102 for example comprises a lens 106 and an image sensor 108. An output 110 of the image sensor 108 is coupled to the processing device 104.

The processing device 104 for example provides an output signal s_{OUT} on an output 112 in response to the detection of the presence or non-presence of a user.

As used herein, the detection of the presence of a user is defined as the detection of any body or body part of a human in the image captured by the image sensor 108, in other words in the field of view of the camera module 102. For example, this could include the detection of a human face or hand by the processing device 104. User presence detection may include gesture recognition, for example of a face or hand. The "user" could be anyone in the field of view of the camera module 102, or a person recognisable by the processing device 104, for example someone who has been previously detected.

The output signal s_{OUT} on line 112 for example controls a further hardware device (not shown in Figure 1), such as a display, as will be described in more detail below. In one embodiment, the user presence detection device 100 is implemented at least partially as a system on chip. For example, the image sensor 108 and the processing device 104 are integrated on a same semiconductor chip. Furthermore, in some embodiments, the camera module 102 and the processing device 104 are integrated in a single chip. Alternatively, the camera module could embed two chips: the image sensor 108 and the processing device 104.

The processing device 104 for example applies a pattern recognition algorithm in order to detect a face or other human feature. Pattern recognition techniques are known to those skilled in the art. For example, the processing device 104 implements a face recognition technique based on pattern recognition as described in US patent application publication US 2011/0299783. Alternatively, other techniques based on Haar-like features could be used, as described in more detail in the publication entitled "Partially parallel architecture for AdaBoost-based detection with Haar-like features", Hiromote et al., IEEE transactions on circuits and systems for video technology, Vol. 19, No. 1, January 2009. As a further example, the human detection techniques based on pattern recognition discussed in the following publications could be used: "Face detection by cascade of Gaussian derivates classifiers calculated with a half-octave pyramid", Ruiz-Hernandez et al.; "Fast human detection using a cascade of histograms of oriented gradients", Qiang Zhu et al. As an alternative to pattern detection, the user presence detection could comprise other forms of gesture detection, such as the detection of feature vector, for example detecting a swiping movement of a hand.

As will be explained in more detail below, the camera module 102 comprises a light filter 107, represented by a dashed line in Figure 1. While the light filter 107 has been illustrated positioned between the image sensor 108 and the lens 106, it could be positioned elsewhere in the light path of the camera module 102, as will be described in more detail below.

The light filter 107 provides an interference filter that is adapted to filter out a relatively large portion of the visible light spectrum. In particular, visible light can be defined as light having a wavelength of between around 380 nm and 740 nm, and the light filter 107 has a lower cut-off wavelength of between 550 nm and 700 nm, for example between 600 nm and 650 nm. The lower cut-off wavelength for example corresponds to the wavelength of light below which the transmission rate of the filter falls to 10 percent or less. The filter 107 is for example a red filter that allows through at least some of the red light spectrum and at least some of the near infrared light spectrum.

The image sensor 108 for example provides a black and white image. Furthermore, no further color filters or infrared filters are for example present in the camera module 102, the pixels of the pixel matrix 201 all receiving light filtered only by the filter 107. Thus the camera module is sensitive to at least part of the near infrared light spectrum.

Figures 2A to 2E schematically illustrate in more detail examples of the camera module 102 according to a number of different embodiments, and in particular examples of the implementation of the filter 107. Arrows in Figures 2A to 2E illustrate the incident light entering the camera module 102 and focused on a pixel matrix 201 of the image sensor 108.

With reference to Figure 2A, in this embodiment the lens 106 has a layer 202 of material coating one side forming the filter 107. The layer 202 could be coated on either the top of bottom surface of lens 106, or on both surfaces. For example, the layer 202 is a polymer coating.

Figure 2B illustrates an alternative embodiment of the camera module 102 in which the filter 107 is formed by a layer 204 of material deposited over the image sensor 108, for example by spin-coating or by spluttering to ensure an even thickness. The layer 204 may be formed over the entire top surface of the image sensor 108 as illustrated in Figure 2B, or alternatively over only the pixel matrix 201. For example, the layer 204 is applied directly over the silicon stack of the pixel matrix 201. In one example, the material of layer 204 is a polymer, such as a polymer photoresist, adapted to have a lower cut-off wavelength of between 550 nm and 700 nm.

Figure 2C illustrates a further embodiment in which, rather than having the lens 106, the image sensor 108 of the camera module 102 comprises an array 206 of microlenses 208 formed over the pixel matrix 201. While for ease of representation only a few microlenses 208 have been shown, in practise a microlens 208 is for example positioned over each pixel of the pixel matrix 201. In this embodiment, the filter 107 is formed as a layer 210 of material coating the microlens array 206. Again, the material of the filter 107 is for example a polymer such as a photoresist deposited by spin-coating or by spluttering.

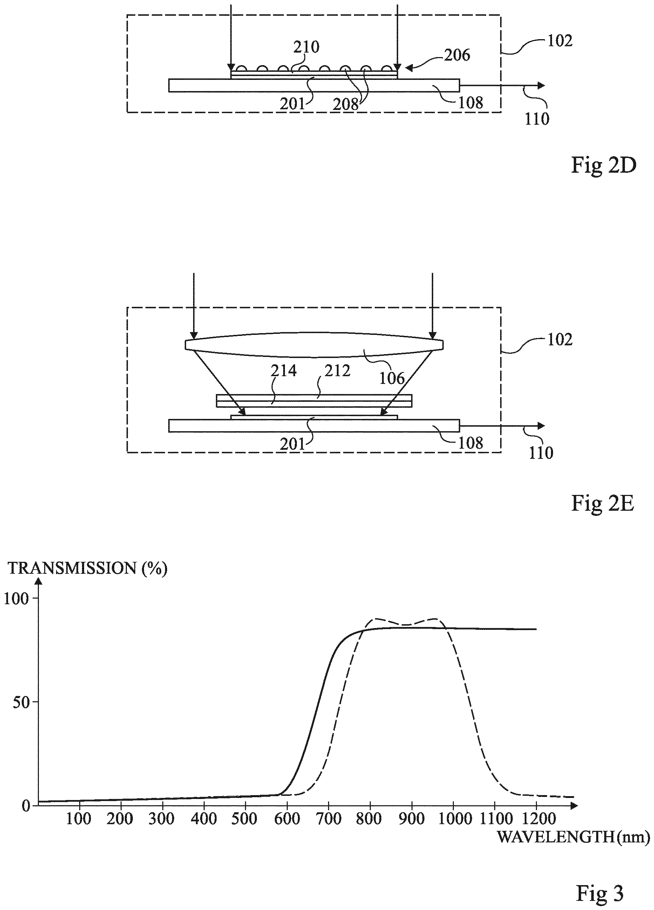

Figure 2D illustrates a further example of the camera module 102 according to an alternative embodiment, similar to that of Figure 2C, but in which the layer 210 forming the filter is positioned between the pixel matrix 201 and the microlens array 206. Again, the layer 210 is for example deposited by spin coating or spluttering.

Figure 2E illustrates yet a further example of the camera module 102 in which the filter 107 is formed as a separate component of the lens system, and in particular it is formed of a layer 212 of material coating a transparent plate 214, which is for example a planar glass or polymer plate. Again, the material forming the filter 107 is for example a polymer coating, and layer 212 could be provided on either the top or bottom surface of the transparent plate 214.

It will be apparent to those skilled in the art that certain features of the embodiments of Figures 2A to 2E could be combined in alternative embodiments. For example, the microlens array 206 of Figure 2C could be used in conjunction with the transparent plate 212 forming the filter in Figure 2E. Furthermore, while not illustrated in Figures 2A to 2E, rather than being a convex-convex lens, the lens 106 could be a different type of lens and/or there could be more than one lens 106. A lens barrel could be provided for housing the one or more lenses 106 and/or the filter 107.

A method of manufacturing the camera module 102 of any of Figures 2A to 2E for example comprises the step of coating an element of the camera module with a layer of material to form a light filter having a lower cut-off wavelength of between 550 nm and 700 nm. For example, the element is a lens of the camera module, planar or convex, or the pixel matrix of the image sensor itself.

Figure 3 is a graph illustrating an example of the filter characteristics of the filter 107 of the lens module 102 of Figure 1. In particular, the graph shows the filter transmission rate, indicated as a percentage of light, plotted against the light wavelength.

In one example shown by a solid line curve in Figure 3, the filter 107 is a long pass filter, allowing light of wavelengths over a certain length to pass with a relatively high transmission rate. In the example shown in Figure 3, the filter represented by this solid curve has a lower cut-off wavelength of around 610 nm, meaning that for example light having a wavelength of 610 nm or less has a transmission rate of 10 percent or less through the filter.

In another example shown by a dashed line curve in Figure 3, the filter 107 is a band-pass filter having a central wavelength of 900 nm, and a bandwidth of a little over 400 nm. In alternative embodiments, the central wavelength could more generally be between 650 nm and 950 nm, for example at 650 nm or 700 nm, and the bandwidth of the pass-band could be between 200 and 600 nanometers. In the example shown in Figure 3, the filter represented by this dashed curve has a lower cut-off wavelength of around 680 nm, but more generally the lower cut-off wavelength of the pass-band filter is for example in the range 550 nm to 700 nm. The higher cut-off wavelength of the band-pass filter is around 1100 nm in the example of Figure 3, but more generally is for example between 900 nm and 1100 nm.

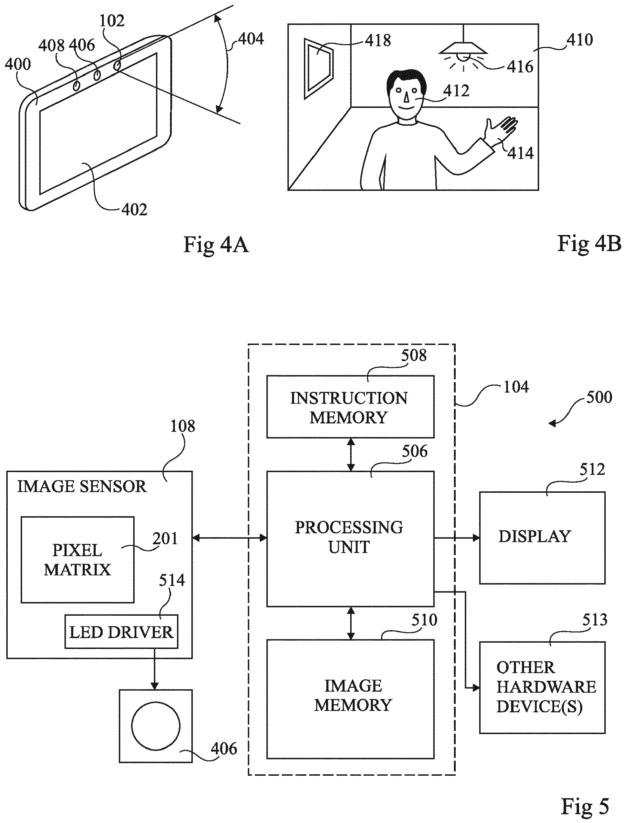

Figure 4A illustrates an example of an electronic device 400 comprising the user presence detection device described herein, for example the device 100 of Figure 1. In particular, the electronic device 400 comprises a display 402, which is for example a touch screen, and the camera module 102 of the user presence detection device 100 is positioned in a frame around the display. The camera module 102 for example has a field of view 404 represented by lines in Figure 4A delimiting a zone in front of the display 402. In this way, the user presence detection device 100 is adapted to detect the presence of a user in front of the display 402.

The electronic device 400 also for example comprises an LED (light emitting diode) 406 for scene illumination. In particular, LED 406 is for example adapted to improve the lighting conditions for user presence detection when the image is captured by the image sensor 108 of the camera module 106, as will be discussed in more detail below.

Furthermore, the electronic device 400 for example comprises a further camera module 408, which is for example part of a webcam or other color digital camera. The electronic device 400 is for example a PC (personal computer), tablet computer, industrial screen, cell phone or other mobile communications device, digital camera, television, notebook computer, ATM (automated teller machine), alarm device of an alarm system, clean room management device, or other device, and in some embodiments the display 402 is not provided.

In the embodiment of Figure 4A, the output signal s_{OUT} of the processing device 104 of the user presence detection device 100 for example controls the display 402. For example, in one embodiment, the signal s_{OUT} activates the display 402 if a user is detected in the zone in front of the display, and/or deactivates the display if user presence is not detected in this zone.

As a further example, the display 402 may be adapted to display an image or live video stream captured by an image sensor of the camera module 408. Then, the signal s_{OUT} of the user presence detection device 100 for example indicates on the display 402, superimposed over the displayed image, the position of a face or other human feature detected by the user presence detection device 100.

As yet a further example, in addition to detecting the presence of a human feature, the user presence detection device 100 for example detects a movement or gesture of this feature. For example, it could detect the waving of a hand in a certain direction, the pointing of a finger, the winking of an eye or other gesture of the human feature. By comparing the detected gesture with a number of reference gestures and detecting a match, the gesture made by the user can be interpreted by the processing device 104 as a specific command. As a simple example, a hand wave in front of the camera module 100 could be recognised and interpreted as a command to activate the display 402 of the device 400. As an alternative example, certain types of hand pose, such as a pinch, grab, opening fist, closing fist, hand swiping motion, etc. could be detected, and used to control any aspect of the function of the device, such as launching or terminating a software application running on the device, or the control of a media playback software application, for example a music or video player.

Figure 4B illustrates an example of an image 410 captured by the image sensor 108 of the of the camera module 102 of Figure 1. In this example, a user is present, and has a face 412 and a hand 414 visible in the image. An artificial light source 416 and a natural light source 418 are present within the field of view of the camera module 102, and there light sources are located in the background behind the user. Such back lighting and/or strong front or side lighting add interference to the signal captured by the camera module. In particular, human skin of the face 412 and of the hand 414 is particularly prone to being distorted by such lighting.

Advantageously, the present inventors have found that, by providing a camera module 102 comprising the filter 107 having a lower cut-off wavelength of between 550 nm and 700 nm, the interference caused by strong back, front or side light conditions on human skin can be significantly reduced. For example, user presence detection based on pattern recognition or feature vector detection becomes much more effective. The improvement can be even more pronounced if the filter has a lower cut-off wavelength of between 550 nm and 600 nm.

Figure 5 schematically illustrates a user presence detection device 500 according to a further embodiment. Features in common with the device 100 of Figure 1 and camera module 102 of Figure 2A to 2E have been labelled with like reference numerals in Figure 5 and will not be described again in detail.

The device 500 comprises the image sensor 108, having the pixel matrix 201, and in communication with the processing device 104. The processing device 104 for example comprises a processing unit 506 under the control of an instruction memory 508 for performing user presence detection as described herein. Furthermore, the processing unit 506 is for example coupled to an image memory 510 of the processing device 104, in which images captured by the image sensor 108 are stored, at least while they are processed by the processing unit 506. The processing unit 506 is also coupled to a display 512, which may also be a touch screen, and/or to one or more further hardware devices 513. The display 512 and/or other devices 513 are for example controlled by the signal s_{OUT} of the detection device 104 in response to a detected user presence. The other hardware devices 513 could include for example a video processing unit, a sound or video card, and/or a memory device.

Optionally, the device 500 also comprises the LED (light emitting diode) 406 of Figure 4A, for example controlled by an LED driver 514 of the image sensor 108 to emit light while an image is captured. The LED 406 is for example adapted to emit light having a wavelength of between 800 nm and 1000 nm, for example 850 nm or 940 nm. For example, the LED is only activated under low-level lighting conditions, for example determined by image statistics analysis. The level at which the LED is activated for example depends on the auto-exposure algorithm settings of the image sensor.

The pixel matrix 201 is for example a CMOS pixel matrix. Alternatively, other types of silicon-based pixel matrices could be used, such as a CCD (charge-coupled device) array. Such silicon-based image sensors generally have light sensitivity for light waves up to around 1000 nm in wavelength, and thus the image sensor is for example insensitive to thermal radiation. The pixel matrix 201 for example has a resolution of 640 by 480 pixels corresponding to VGA (video graphics array), although alternatively the resolution could be anything between 320 by 200 pixels, corresponding to QVGA (quarter video graphics array), up to an array size of 20 MPixels. As a further example, an array of 1280 by 720 or of 1920 by 1080 pixels could be used, corresponding to high definition video progressive scan formats 720p and 1080p respectively.

The device 500 may additionally comprise a color image sensor (not illustrated in Figure 5).

In one embodiment, the processing device 104 and the image sensor 108 are formed on a same chip. For example, the processing unit 506, image sensor 108 and image memory 510 are interconnected by a network on chip (NoC).

The device 500 is for example integrated in the electronic device 400 of Figure 4A.

An advantage of the embodiments described herein is that, by providing an image sensor combined with a light filter having a lower cut-off wavelength of between 550 nm and 700 nm, user presence detection in a captured image is greatly improved. In particular, the detection by pattern recognition of skin features is greatly facilitated by the use of such a filter combined with a silicon-based image sensor.

Whilst a number of specific embodiments have been described, it will be apparent to those skilled in the art that there are various modifications that could be made.

For example, while some examples of applications of the user presence detection device have been provided, it will be apparent to those skilled in the art that there are a broad range of other applications and/or functions to which the detection device could be applied.

Furthermore, it will be apparent to those skilled in the art that the various features described herein could be combined in alternative embodiments in any combination.

## Claims

1. A user presence detection device comprising:
a camera module (102) having a silicon-based image sensor (108) adapted to capture an image; and
a processing device (104) configured to process said image to detect the presence of a user, wherein the camera module further comprises a light filter (107) having a lower cut-off wavelength of between 550 nm and 700 nm.

2. The user presence detection device of claim 1, wherein said light filter (107) has a lower cut-off wavelength of between 550 nm and 600 nm.

3. The user presence detection device of claim 1 or 2, wherein said light filter (107) is formed of a layer of material (204) coating a pixel matrix (201) of said image sensor.

4. The user presence detection device of any of claims 1 to 3, wherein said light filter (107) is formed of a layer of polymer material.

5. The user presence detection device of any of claims 1 to 4, wherein said light filter (107) is a band pass filter having a higher cut-off wavelength of between 900 nm and 1100 nm.

6. The user presence detection device of any of claims 1 to 5, wherein said image sensor comprises a CMOS pixel matrix.

7. The user presence detection device of any of claims 1 to 6, wherein said processing device is configured to apply a pattern or feature vector detection technique in order to detect the presence of a user.

8. The user presence detection device of claim 7, wherein said pattern detection technique is based on the detection of Haar-like features in said image.

9. The user presence detection device of any of claims 1 to 8, wherein said processing device is configured to detect the presence of the face or a hand of the user in said image.

10. The user presence detection device of any of claims 1 to 9, further comprises a light emitting diode (514) adapted to generate light having a wavelength of between 800 nm and 1000 nm.

11. The user presence detection device of any of claims 1 to 10, wherein said processing device is adapted to control a further hardware device (512, 513) in response to the detection of the presence of said user in said image.

12. The user presence detection device of claim 11, wherein said camera module is oriented in said device such that its field of view encompasses a zone in front of said display, and wherein said processing device is configured to deactivate said display if no user presence is detected in said zone.

13. The user presence detection device of any of claims 1 to 12, comprising a further camera module (406) having a color image sensor.

14. A semiconductor chip comprising the user presence detection device of any of claims 1 to 13.

15. A method of manufacturing a camera module comprising a silicon-based image sensor (108) for use in detecting the presence of a user, the method comprising:
coating an element of the camera module with a layer of material to form a light filter having a lower cut-off wavelength of between 550 nm and 700 nm.
